# EUROPEAN PATENT APPLICATION

(11) **EP 1 765 010 A2**
(43) Date of publication of application: **21.03.2007**
(21) Application number: 06120153.9
(22) Date of filing: 05.09.2006
(51) Int. Cl.: H04N 5/445

(54) **Signal processing method and apparatus**

(30) Priority: 16.09.2005 KR 20050086729
(71) Applicant: Samsung Electronics Co., Ltd., Suwon-si, Gyeonggi-Do (KR)
(72) Inventor: Lee, Joo-yoen Mudeung maeul LG Apt. 107-303, Gyeonggi-do (KR)
(74) Representative: Clark, Charles Robert

(57) **Abstract**

The present invention relates to a signal processing apparatus, comprising a signal interface which receives a broadcast signal comprising broadcast data; a signal processor which generates a channel information guide (CIG) comprising channel information; and a controller which controls the signal processor to detect a state of the received broadcast signal and to generate the channel information guide (CIG) based on state data of the broadcast signal according to a detection result and the broadcast data. Thus, the present invention provides a signal processing apparatus which provides a user with a channel information guide based on state data detected by itself, as well as broadcast data included in a broadcast signal, and a method for processing signal thereof.

## Description

The present invention relates to a signal processing apparatus and method, and more particularly, but not exclusively, to a signal processing apparatus and method capable of processing a broadcast signal comprising a video signal, an audio signal and broadcast data received from an external source.

Generally, terrestrial, cable and satellite broadcasts transmit broadcast data with channel information, and a broadcast signal having broadcast data for information on a program provided by a corresponding channel, to a signal processing apparatus. Electronic program guide (EPG) information is an example of the broadcast data.

The signal processing apparatus such as a TV or a set top box displays the broadcast data on a channel information menu to be supplied to, or viewed by a viewer.

A conventional channel information menu is generated on the basis of the broadcast data which is included in the broadcast signal. Accordingly, the channel information menu supplied to a viewer by a conventional signal processing apparatus does not include information other than the broadcast data generated by the external source such as a broadcast station.

Accordingly, it is an aim of the present invention to provide a signal processing apparatus which provides a user with a channel information guide based on a detected state data of the channels, as well as broadcast data included in a broadcast signal, and a method for processing signal thereof.

Accordingly, the present invention provides a signal processing apparatus, comprising a signal interface which receives a broadcast signal comprising broadcast data; a signal processor which generates a channel information guide (CIG) comprising channel information; and a controller which controls the signal processor to detect a state of the received broadcast signal (state data) and to generate the channel information guide (CIG) based on state data of the broadcast signal according to a detection result and the broadcast data.

Advantageously, the controller can be arranged to use the detected state of the broadcast signal for generating state data.

Advantageously, the state of the broadcast signal comprises at least one of a reception level of the broadcast signal, a physical transmission channel (PTC), a modulation type, a broadcast mode and resolution information, or any combination thereof.

Advantageously, the channel information comprises at least one of the reception level of the broadcast signal, the physical transmission channel (PTC), the modulation type, the broadcast mode, the resolution information, a program genre, a program title, viewing limitation information and time information, or any combination thereof.

Advantageously, the controller controls the signal interface to output the state data on the state of the broadcast signal if it receives a predetermined request signal. The request signal can be arranged so as to cause request of the state data through the signal interface.

Advantageously, the signal processing apparatus further comprises a user selection part, wherein the controller controls the signal processor so that only information selected through the user selection part is included in the channel information.

Advantageously, the broadcast data comprises a program and system information protocol (PSIP).

Advantageously, the signal processing apparatus further comprises a display part which displays the channel information guide thereon.

Furthermore, the present invention also provides a method for processing a signal, comprising receiving a broadcast signal comprising broadcast data; detecting a state of the broadcast signal; and generating a channel information guide (CIG) comprising channel information based on state data according to a detection result and the broadcast data.

Advantageously, the detecting the state of the broadcast signal comprises determining at least one of a reception level of the broadcast signal, a physical transmission channel (PTC), a modulation type, a broadcast mode and resolution information.

Advantageously, generating the channel information guide comprises allowing the channel information to include at least one of the reception level of the broadcast signal, the physical transmission channel, the modulation type, the broadcast mode, the resolution information, a program genre, a program title, viewing limitation information and time information, or any combination thereof.

Advantageously, the method further comprises receiving a predetermined request signal which requests the state data; and outputting the state data on the state of the broadcast signal based on the request signal.

Advantageously, the method further comprises providing a user selection part; selecting predetermined information through the user selection part; and allowing the channel information to include only the information selected through the user selection part.

Advantageously, the method further comprises displaying the channel information guide.

Embodiments of the present invention are now described by way of example and with reference to the accompanying drawings, of which:
Figure 1 is a schematic control block diagram of a signal processing apparatus according to an embodiment of the present invention;
Figure 2 illustrates an example of a channel information guide according to the embodiment of the present invention; and
Figure 3 is a schematic control flowchart of the signal processing method according to an embodiment of the present invention.

Reference will now be made in detail to the embodiments of the present invention, examples of which are now provided and illustrated in the accompanying drawings, wherein like reference numerals refer to like elements throughout.

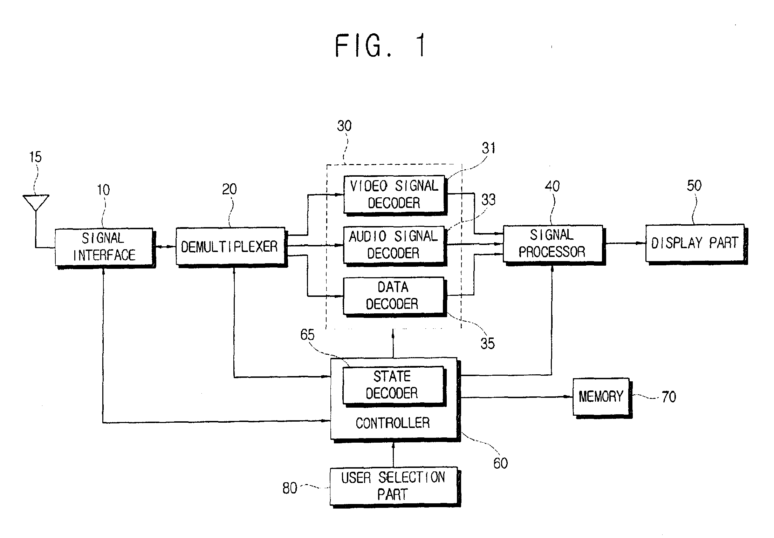

Figure 1 is a control block diagram of a signal processing apparatus according to the present invention.

The signal processing apparatus comprises a signal interface 10 which receives a digital broadcast signal; a signal processor 40 which processes the broadcast signal received through the signal interface 10; and a controller 60 which controls the foregoing elements. The signal processing apparatus may further comprise a demultiplexer 20, a decoder 30, a user selection part 80 and a display part 50.

The digital broadcast signal is transmitted as a transport stream for which a video signal, an audio signal and broadcast data are time-division multiplexed and packetized (or packaged).

The signal interface 10 receives the broadcast signal comprising a video signal, an audio signal and broadcast data, through an antenna 15. The signal interface 10 comprises a tuner (not shown) and a demodulator (not shown). The broadcast data comprises a program and system information protocol (PSIP) which has a system time table (STT), a master guide table (MGT), a rating region table (RRT), an event information table (EIT), an extended text table (ETT) and a virtual channel table (VCT).

The tuner tunes the received broadcast signal into a broadcast signal corresponding to a channel selected by a tuning control signal received from the controller 60 (to be described later). The demodulator demodulates and error-corrects the broadcast signal of a certain channel tuned by the tuner to be transmitted as a transport stream.

The demultiplexer 20 divides the broadcast signal received from the signal interface 10 into the video signal, the audio signal and the broadcast data. The demultiplexer 20 outputs the video signal to a video signal decoder 31, the audio signal to an audio signal decoder 33, and the broadcast data to a data decoder 35. Then, the video signal decoder 31, the audio signal decoder 33 and the data decoder 35 respectively decode the video and audio signals and the broadcast data divided by the demultiplexer 20 to output them to the signal processor 40.

The signal processor 40 processes the broadcast signal, i.e., the video and audio signals and the broadcast data decoded by the decoder 30 to output them to the display part 50. The signal processor 40 comprises a scaler which converts the broadcast signal into a vertical frequency, resolution, and a picture ratio to conform to output standards of the display part 50.

The signal processor 40 comprises an interface picture generator (not shown) which generates an interface picture comprising information with reorganized data based on the broadcast data.

The display part 50 comprises a display module (not shown) which displays an image thereon, and a module driver (not shown) which processes the broadcast signal input from the signal processor 40 to display an image on the display module. Here, the display module according to the present invention may comprise various display modules such as a digital light processing (DLP), a liquid crystal display (LCD) and a plasma display panel (PDP), or the like.

If the DLP is provided as the display module, the module driver may comprise an optical engine. If the LCD is provided as a display module, the module driver may comprise a printed circuit board (PCB) which converts the signal input from the signal processor 40 into a data signal and a gate signal. The display part 50 may comprise a module driver corresponding to types of the respective display modules.

The user selection part 80 is provided so that the user can input or select a predetermined function. The user selection part 80 may be variously provided including a plurality of input keys, a button or a remote control.

The controller 60 controls the respective parts to display the broadcast signal on the display part 50. The controller 60 may comprise a state detector 65 which detects a state of the broadcast signal received through the signal interface 10. Accordingly, the controller 60 may detect the state of the broadcast signal received through the signal interface 10.

For example, the controller 60 determines the state of the broadcast signal such as a reception level and types of the broadcast signal by channel, and generates state data according to a determination result. The types of the broadcast signal may comprise at least one of a physical transmission channel (PTC) corresponding to the respective channels, a modulation type of the respective channels (ex. 8VSB: Vestigial Side Band, 16VSB, 64QAM: Quardrature Amplitude Modulation), a broadcast mode (ex. ATSC: Advanced Television System Committee, OCAP: Open Cable Application Platform) and resolution information. Here, the resolution information may be included in a sequence header of the broadcast signal to be transmitted. The controller 60 may determine a resolution based on the resolution information of the sequence header.

The controller 60 reorganizes channel information based on the state data on the state of the broadcast signal and the broadcast data included in the broadcast signal to generate a channel information guide (CIG), and controls the signal processor 40 to display the generated channel information guide on the display part 50 as the interface picture.

The channel information may comprise the reception level of the broadcast signal, the physical transmission channel (PTC), the modulation type, the resolution information, a program genre, a program title, viewing limitation information, a closed caption degree, time information, or the like. The controller 60 may store the channel information in the memory 70.

The controller 60 may control the signal processor 40 to generate the channel information guide based on at least a part of the channel information stored in the memory 70, and to output it to the display part 50.

If at least a part of the channel information is selected through the user selection part 80, the controller 60 may control the signal processor 40 so that only the selected information is included in the channel information.

For example, if the display part 50 displays a list of the channel information selectable by a user, the controller 60 may control the signal processor 40 so that only the information selected through the user selection part 80 among the channel information included in the list, is outputted to the display part 50 as the channel information guide. That is, the display part 50 displays the reception level of the broadcast signal, the physical transmission channel, the modulation type, the resolution information, the program genre, the program title, the viewing limitation information, the closed caption degree, the time information, etc. as the list of the channel information. If the reception level of the broadcast signal, the modulation type, the resolution information, the program genre are selected through the user selection part 80, the channel information guide may include only the reception level of the broadcast signal, the modulation type, the resolution information and the program genre corresponding to respective channels. Furthermore, the CIG may comprise only the detected state information and none of the broadcast information which is included in the broadcast signal.

Meanwhile, the controller 60 may cause the signal processing apparatus to transmit the state data broadcast to an external source, such as a broadcast station or a cable company, in response to a request signal from the external source.

For example, if an external source requests the detected state data such as the reception level of the broadcast signal, the signal processing apparatus may transmit the information on the reception level of the detected state data to the broadcast station. Thus, the broadcast station may determine the state of the broadcast signal supplied to the signal processing apparatus and control the state of the broadcast signal if the reception level of the broadcast signal is lower than a predetermined level. The signal interface includes the two-way communication line and communication scheme utilized in cable or satellite set-top boxes (over wired telephone line, internet or wireless connection) or hotel LAN/servers to transmit or allow access of various kinds of state data detected by the signal processing apparatus.

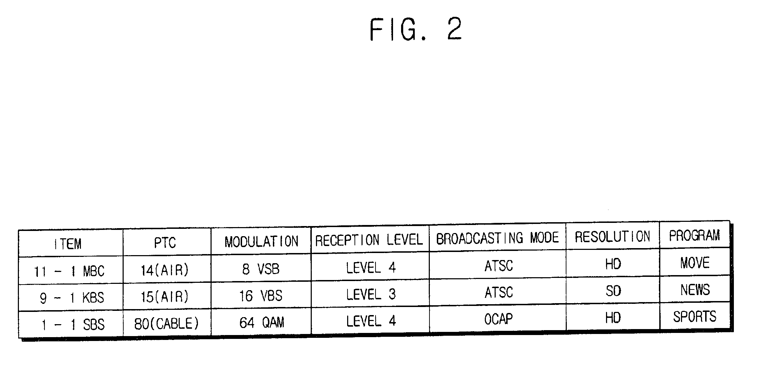

Figure 2 illustrates an example of a channel information guide according to an embodiment of the present invention.

As shown therein, the channel information guide may comprise channel information (refer to "item" in Figure 2) as a basic table based on respective channels.

Here, a reference channel is a virtual channel. The channel information comprises a physical transmission channel (PTC), a modulation type, a reception level, a broadcast mode, resolution information and a program genre as an example.

In the example of the Fig. 2, the virtual channel is 11-1 and the PTC is channel No. 14. The channel No. 14 is an air/wave broadcast (AIR), and the modulation type of the video signal corresponding to the channel 11-1 is 8VSB. The reception level of the video signal is Level 4, and the broadcast mode is ATSC. The resolution information of the broadcast signal is HD (high definition), and the program genre of the currently supplied broadcast signal is a movie. MBC is displayed as the broadcast station corresponding to the virtual channel 11-1 in the channel item.

MBC may be displayed in the channel information item as well. Even though 11-1 is displayed in the PTC as the air/wave broadcast, it may be provided as an additional item.

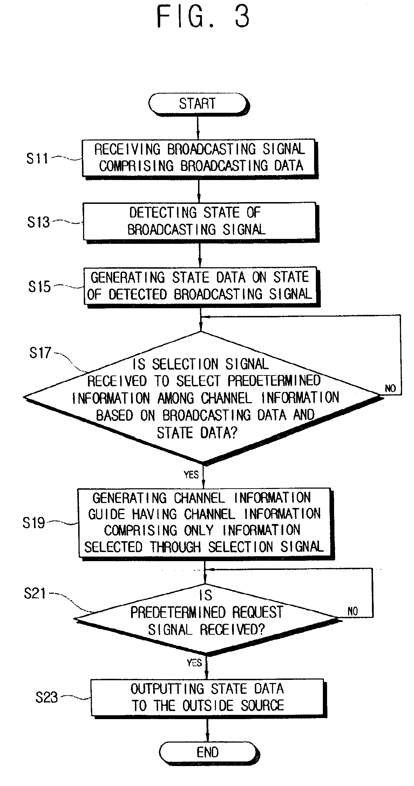

Figure 3 illustrates a flowchart of a signal processing method according to the present invention.

As shown therein, the signal interface 10 provided in the signal processing apparatus receives a broadcast signal comprising a video signal, an audio signal and broadcast data at operation S11. The demultiplexer 20 divides the received broadcast signal into the video and audio signals and the broadcast data. Here, the controller 60 controls the tuner provided in the signal interface 10 to tune the respective channels and to receive the broadcast signal corresponding to the respective channels if the signal processing apparatus is turned on or a predetermined condition is generated. The controller 60 detects the broadcast data included in the respective broadcast signals.

The state detector 65 detects the state of the received broadcast signal at operation S13, and generates the state data based thereon at operation S15. The controller 60 may store the state data and the broadcast data in the memory 70. At this time, the controller 60 may classify and store the respective channel information based on the state data and broadcast data. The controller 60 may control the signal processor 40 to display the channel information set as a default, on the display part 50.

If the controller 60 receives a selection signal to select predetermined information among the channel information based on the broadcast data and the state data stored in the memory 70 at operation S17, it may control the signal processor 40 to generate the channel information guide having the channel information including only information selected by the selection signal at operation S19. Then, a user may control the display part 50 to display the desired channel information only, corresponding to the respective channels.

Meanwhile, if the controller 60 receives a predetermined request signal to request the state data from the external source such as the broadcast station at operation S21, the particular state data that is requested is outputted to the external source at operation S23.

In the signal processing apparatus, the display part 50 is provided in the signal processing apparatus, but not limited thereto. Alternatively, the display part 50 may be provided as an additional device. For example, the signal processing apparatus according to the present invention may be implemented as a set-top box having no display. Alternatively, the signal processing apparatus according to the present invention may be implemented in devices having its own display such as a digital TV.

As described above, the signal processing apparatus provides the information supplied through the broadcast data received from the external source, and also information supplied through the state data based on a detection of the received broadcast signal, thereby supplying various kinds of information to the user. That is, the user becomes aware of the broadcast state information, as well as the program information.

Also, the signal processing apparatus may transmit the state data stored in the memory 70 to the broadcast station if such state data is desired to be known by the broadcast station. Thus, the broadcast station is able to recognise the broadcast state through the state data and thus may be able to adjust, or control the broadcast signal.

Although a few embodiments of the present invention have been shown and described, it will be appreciated by those skilled in the art that changes may be made in these embodiments without departing from the principles of the invention, the scope of which is defined in the appended claims and their equivalents.

## Claims

1. A signal processing apparatus, comprising:
means for receiving a broadcast signal comprising broadcast data; and
means for generating a channel information guide (CIG) comprising channel information;
the means being arranged to detect a state of the received broadcast signal and to generate the channel information guide (CIG) based on the detected state of the broadcast signal and the broadcast data.

2. The signal processing apparatus according to claim 1, wherein the state of the broadcast signal, or state data, comprises at least one of a reception level of the broadcast signal, a physical transmission channel (PTC), a modulation type, a broadcast mode and resolution information.

3. The signal processing apparatus according to claim 2, wherein the channel information comprises at least one of the reception level of the broadcast signal, the physical transmission channel (PTC), the modulation type, the broadcast mode, the resolution information, a program genre, a program title, viewing limitation information and time information.

4. The signal processing apparatus according to any preceding claim, further comprising a controller arranged to control the receiving means so as to output the state data on the state of the broadcast signal when it receives a predetermined request signal requesting the state data through the signal interface.

5. The signal processing apparatus according to any preceding claim, further comprising:
a user selection part, and
a controller arranged to control the generating means so that information selected only through the user selection part is included in the channel information.

6. The signal processing apparatus according to claim 1, wherein the broadcast data comprises a program and system information protocol (PSIP).

7. The signal processing apparatus according to any preceding claim, further comprising a display part which displays the channel information guide thereon.

8. A method for processing a signal, comprising:
receiving a broadcast signal comprising broadcast data;
detecting a state of the broadcast signal; and
generating a channel information guide (CIG) having channel information based on the broadcast data and the state data.

9. The method according to claim 8, wherein the detecting the state of the broadcast signal comprises determining at least one of a reception level of the broadcast signal, a physical transmission channel (PTC), a modulation type, a broadcast mode and resolution information.

10. The method according to claim 8 or 9, wherein the generating the channel information guide comprises allowing the channel information to include at least one of the reception level of the broadcast signal, the physical transmission channel, the modulation type, the broadcast mode, the resolution information, a program genre, a program title, viewing limitation information and time information.

11. The method according to claim 8, 9 or 10, further comprising:
receiving a predetermined request signal which requests the state data; and
outputting the state data on the state of the broadcast signal based on the request signal.

12. The method according to any of claims 8 to 11, further comprising:
providing an user selection part;
selecting predetermined information through the user selection part; and
allowing the channel information to include information selected only through the user selection part.

13. The method according to any of claims 8 to 12, further comprising displaying the channel information guide.

14. A method according to any of claims 8 to 13, wherein
generating a channel information guide comprising at least one of a detected plurality of state information of the broadcast television signal.

15. The method according to claim 14, further comprising the step of selecting by a user which one of said plurality of state information is included in said channel information guide.

16. The method according to claim 14 or 15, wherein said state information includes at least one of reception level, modulation type, broadcast mode, video resolution or the physical transmission channel information.

17. The method according to claim 14, 15 or 16, wherein the plurality of state information included in the channel information guide is a portion of the plurality of state information detected in the detecting step.

18. The method according to claim 14, wherein said channel information guide further includes broadcast information.

19. The method according to any of claims 8 to 18, further comprising the step of transmitting the detected state information to a remote source.

20. The method according to claim 19, wherein the remote source is a television broadcast station.

21. The method according to claim 19, wherein said transmitting step comprises using either,
a telephone line to transmit the state information upon request from the remote source,
or an internet connection to transmit the state information upon request from the remote source.

22. The method according to any of claims 8 to 21, further comprising the step of displaying said channel information guide.

23. The method according to claim 8, wherein said channel information guide further includes at least one broadcast information corresponding to said channel number or name.
